# EUROPÄISCHE PATENTSCHRIFT

(11) **EP 1 498 220 B1**
(45) Veröffentlichungstag und Bekanntmachung des Hinweises auf die Patenterteilung: **22.11.2006**
(21) Anmeldenummer: 04015437.9
(22) Anmeldetag: 01.07.2004
(51) Int. Cl.: B23Q 5/04

(54) **Werkzeugmaschine zum drehbaren zuschaltbaren Antrieb von einem oder mehreren Werkzeugen**
Machine tool for switchable rotation of one or more tools
Machine outil pour la rotation accouplée d'un outil ou d'outils multiples

(30) Priorität: 18.07.2003 DE 10332694
(43) Veröffentlichungstag der Anmeldung: 19.01.2005
(73) Patentinhaber: Eisenbach, Bernhard, D-65611 Brechen (DE)
(72) Erfinder: Eisenbach, Bernhard, D-65611 Brechen (DE)
(74) Vertreter: Müller, Eckhard

(56) Entgegenhaltungen:
- WO-A-90/14929
- SU-A- 610 990
- PATENT ABSTRACTS OF JAPAN vol. 1998, no. 03, 27. Februar 1998 (1998-02-27) -& JP 09 285908 A (MATSUSHITA ELECTRIC WORKS LTD), 4. November 1997 (1997-11-04)

## Beschreibung

Die Erfindung betrifft eine Werkzeugmaschine zum drehbaren Antrieb von einem oder mehreren Werkzeugen, wie Bohrer, Fräser oder dergleichen, mit einer mittels eines Motors rotierend antreibbaren Antriebswelle und einer Abtriebswelle, wobei die Wellen im wesentlichen koaxial oder fluchtend zueinander angeordnet und über Kupplungsmittel miteinander wirkverbunden sind, und mit der Abtriebswelle das Werkzeug beispielsweise über einen Werkzeughalter verbindbar ist.

Derartige Werkzeugmaschinen sind bereits vielfältig bekannt und können beispielsweise zum Bearbeiten von Stabprofilen, Hohlprofilen oder dergleichen Werkstücken eingesetzt werden. Insbesondere kommen derartige Werkzeugmaschinen zur Bearbeitung von Fensterrahmen bestehend aus Kunststoffprofilen zum Einsatz. Dabei werden die Werkzeuge von dem motorischen Antrieb im allgemeinen dauerhaft in Rotation versetzt, unabhängig davon, ob sich das Werkzeug in der Bearbeitungsstellung an dem Werkstück befindet oder beispielsweise nach Beendigung des Bearbeitungsvorganges von diesem weg verfahren ist, um ein neues Werkstück der Werkzeigmaschine zur Bearbeitung zuzuführen. Insoweit geht von diesen bekannten Werkzeugmaschinen eine nicht unerhebliche Verletzungsgefahr aus, da die Bedienperson beispielsweise beim Wechseln der zu bearbeitenden Werkstücke in Folge von Unaufmerksamkeiten in Kontakt mit den schnell rotierenden Werkzeugen, wie Bohrern oder Fräsern gelangen kann.

Eine Vorrichtung gemäß dem Oberbegriff des Anspruchs 1 ist aus der JP-A-09285908 bekannt. Hierbei handelt es sich um eine Handbohrmaschine mit einem Aufsatz in Form einer auf das zu bohrende Werkstück aufzusetzenden Glocke, innerhalb welcher die Bearbeitungswerkzeuge angeordnet sind. Die Bohrmaschine weist eine von einem Elektromotor rotierend angetriebene Antriebswelle auf, welche in einem Gehäuse axial verschiebbar gelagert ist. Die Antriebswelle ist über eine Kupplung mit einer die Werkzeuge antreibenden Abtriebswelle wirkverbindbar, wobei die Abtriebswelle ihrerseits in einem von der Glocke umgebenen separaten Gehäuse axial feststehend gelagert ist. Das Gehäuse der Antriebswelle und dasjenige der Abtriebswelle sind relativ zueinander verschiebbar. Durch Ansetzen der Werkzeuge auf das zu bearbeitende Werkstück und Ausüben eines Anpressdruckes über die Bohrmaschine auf die Antriebswelle bewirkt eine Druckfeder ein axiales Verschieben des Kupplungsringes, wodurch dessen Innenverzahnung mit der Außenverzahnung der Antriebswelle und die Außenverzahnung des Kupplungsringes mit einer Verzahnung der die Werkzeuge antreibenden Abtriebswelle in Eingriff gelangt. Sobald der Anpressdruck auf die Bohrmaschine entfällt, bewirkt eine auf die Antriebswelle wirkende weitere Druckfeder ein axiales Verschieben der Antriebswelle in eine Ruheposition, in welcher der Kupplungsring außer Eingriff mit der Verzahnung von Antriebs- und Abtriebswelle gelangt.

Aus der WO 90/14929 A 1 ist ein Bohr- oder Schlaghammer bekannt mit einem pneumatischen Schlagwerk, dass über eine zwischen dem Motor und einem Bewegungsumwandlungsgetriebe angeordnete Kupplung zuschaltbar ist, die zwei von einer Trennfeder auseinander gehaltene Kupplungsteile aufweist.

Der Erfindung liegt daher die Aufgabe zugrunde, eine Werkzeugmaschine mit den eingangs genannten Merkmalen dahingehend weiterzubilden, dass ein einfacher und kompakter Aufbau der Werkzeugmaschine erreicht ist.

Diese Aufgabe wird nach der Erfindung durch eine Werkzeugmaschine mit den Merkmalen des Anspruches 1 gelöst.

Durch die Erfindung ist erreicht, dass das Werkzeug bei in der Ruheposition befindlicher Abtriebswelle nicht in Rotation versetzt wird, obwohl die Antriebswelle weiterhin vom Motor angetrieben wird. Erst dann, wenn die Abtriebswelle durch Überwindung der Vorspannung des ersten Federelements aus der Ruheposition verfahren wird, treten die Kupplungsmittel aktiv in Eingriff und sorgen für eine Kupplung von Antriebswelle und Abtriebswelle, worauf das Werkzeug in Rotation versetzt wird. Die Vorspannung des Federelementes wird bevorzugt dann überwunden, wenn das Werkzeug gegen das Werkstück verfahren wird. Insoweit wird das Werkzeug erst dann über die Abtriebswelle und die Kupplungsmittel mit der Antriebswelle gekuppelt, wenn das Werkzeug am Werkstück anschlägt oder angreift.

Bei einer vorteilhaften Ausgestaltung der Erfindung ist es vorgesehen, dass sie Abtriebswelle durch axiales Verfahren hin zur Antriebswelle gegen die Vorspannung des Federelementes in eine mit der Antriebswelle gekuppelte erste Aktiv-Position überführt wird.

Dabei bietet es sich an, dass die Kupplungsmittel durch Magnete, korrespondierende verzahnte Flächen oder bevorzugt durch korrespondierende Konus-Flächen an Antriebswelle und Abtriebswelle gebildet sind.

Nach einem eigenständigen Gedanken der Erfindung kann es sich auch empfehlen, dass die Kupplungsmittel als pneumatische oder hydraulische Kupplung zwischen Antriebswelle und Abtriebswelle ausgebildet sind.

Bevorzugt sind die Kupplungsmittel durch korrespondierende Einfach-Konus-Flächen gebildet. Insoweit bietet es sich an, dass die Kupplungsmittel eine konusförmige Innenwandfläche wie eine entsprechende korrespondierende konusförmige Außenwandfläche besitzen, die beim Verfahren der Abtriebswelle in die erste Aktiv-Position formschlüssig beziehungsweise kraftschlüssig aneinander zur Anlage gelangen, so dass die Drehbewegung der Antriebswelle in dieser gekuppelten Position der Kupplungsmittel auf die Abtriebswelle und damit das Werkzeug übertragen wird.

Nach einer anderen, besonders vorteilhaften Ausgestaltung der Erfindung sind die Kupplungsmittel durch korrespondierende Zweifach-Konusflächen gebildet. Aufgrund dieser Maßnahme werden ausgehend von der Ruheposition eine erste und eine zweite Aktiv-Position der Abtriebswelle bereit gestellt. Die zweite Aktivposition wird dann eingenommen, wenn die Abtriebswelle axial weg von der Antriebswelle verfahren wird. Hieraus ergibt sich der besondere Vorteil, dass insbesondere dann, wenn das Werkzeug, beispielsweise der Bohrer, ein Hohlprofil oder ein dünnwandiges Werkstück durchbricht und in Folge dessen eine Zugbewegung auf das Werkzeug ausgeübt wird, die Kupplungsmittel nicht außer Eingriff gelangen, sondern die Antriebsverbindung zwischen Antriebswelle und Abtriebswelle aufrecht erhalten wird.

Nach einer vorteilhaften Weiterbildung der Erfindung ist es vorgesehen, dass die Abtriebswelle mittels eines weiteren Federelementes mit zum ersten Federelement entgegengerichteter Vorspannung in die von der Antriebswelle entkuppelte Ruheposition vorgespannt ist. Dabei sind die Vorspannungen der beiden Federelemente entgegengerichtet und so eingestellt, dass ohne äußere, auf das Werkzeug einwirkende Kräfte die Antriebswelle beziehungsweise die Kupplungsmittel sich in der Ruheposition befinden, so dass Abtriebswelle und Antriebswelle voneinander entkuppelt sind und die Rotation der Antriebswelle auf die Abtriebswelle und das Werkzeug nicht übertragen wird. Allerdings sorgen eine axiale Auslenkung des Werkzeuges in die eine oder andere Richtung dafür, dass die Kupplungsmittel in Eingriff gelangen und bei Einwirkung von Zug- oder Druckkräften in axialer Richtung auf das Werkzeug die Rotationsbewegung der Antriebswelle weiterhin auf das Werkzeug übertragen wird.

Insoweit ist die Abtriebswelle durch axiales Verfahren weg von der Antriebswelle gegen die Vorspannung des zweiten Federelementes in eine mit der Antriebswelle gekuppelte zweite Aktiv-Position überführbar.

Von Vorteil ist das weitere Federelement als Schraubenfeder, Tellerfeder, oder dergleichen Druck- oder Zugfeder ausgebildet.

Nach einer weiteren, besonders vorteilhaften Ausgestaltung der Erfindung, die insbesondere mit der Ausbildung der Kupplungsmittel in Form von korrespondierenden Einfach-Konus-Flächen zur Anwendung gelangen kann, ist es vorgesehen, dass der Werkzeughalter oder das Werkzeug an einem seinem freien Ende abgewandten Abschnitt ein Anschlag, Abstandhalter nach Art einer Buchse oder Hülse aufweist. Kommt es bei dieser vorteilhaften und eigenständigen Ausgestaltung der Erfindung zu einer Zugbeanspruchung des Bohrers, beispielsweise nach Durchbrechen des Bohrers durch die Wandung des Werkstücks, beispielsweise eines Hohlprofils oder dünnwandigen Werkstücks, so schlägt die den Bohrer oder Fräser umgebende Buchse, Hülse oder auch ein Bohrerbund oder sonstige Abstandshalter nach Durchdringen des Bohrers durch die dünne Wand oder die erste Profilwand an diese an, so dass aufgrund der dann auf das Werkzeug wirkenden Druckbeanspruchung die Kupplungsmittel wieder in die erste Aktiv-Position überführt werden und das Werkzeug durch die Antriebswelle weiter in Rotation versetzt wird.

Nach einer anderen vorteilhaften Ausgestaltung der Erfindung ist es vorgesehen, dass das Werkzeug als Fräser ausgebildet ist, der einen Fräserschneider und am freien Ende eine Eintauchschneide aufweist, die entgegengesetze Steigungen, zum Beispiel Fräserschneide links steigend und Eintauchschneide rechts steigend, aufweisen. Diese Maßnahme hat unter anderem den Vorteil, dass die vom Fräser abgehobenen Späne des Werkstückes nach unten ausgeworfen werden.

Schließlich ist es nach einer besonders vorteilhaften Weiterbildung der Erfindung vorgesehen, dass die Werkzeugmaschine wenigstens zwei Werkzeuge zur Bearbeitung eines Werkstückes hintereinander angeordnet aufweist, wobei wenigstens das der Bedienperson nächstliegende Werkzeug die Kupplungsmittel zur Kupplung von Abtriebswelle und Antriebswelle aufweist. Bereits durch diese Maßnahme wird die mögliche Verletzungsgefahr weitgehend reduziert, da das der Bedienperson nächstliegende Werkzeug nur dann in Rotation versetzt wird, wenn dieses sich in der Bearbeitungsstellung an dem Werkstück befindet. In allen anderen Positionen vor oder nach Bearbeitung des Werkstückes befindet sich dieses Werkzeug in der nicht angetriebenen Ruheposition, so dass ein etwaiger Kontakt der Bedienperson mit dem Werkzeug nicht zu etwaigen Verletzungen führen kann. Es versteht sich, dass jedoch auch die weiteren, von der Bedienperson entfernteren Werkzeuge der Werkzeugmaschine ebenfalls mit den Kupplungsmitteln zur Kupplung von Abtriebswelle und Antriebswelle ausgestattet sein können.

Weitere Vorteile, Weitere Ziele, Vorteile, Merkmale und Anwendungsmöglichkeiten der vorliegenden Erfindung ergeben sich aus der nachfolgenden Beschreibung der Ausführungsbeispiele anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

### Es zeigen:

- Figur 1: ein Ausführungsbeispiel einer erfindungsgemäßen Werkzeugmaschine in Seitenansicht, teilweise geschnitten, und in Draufsicht, mit zwei angetriebenen Werkzeugen,
- Figur 2: ein zweites Ausführungsbeispiel einer erfindungsgemäßen Werkzeugmaschine in Seitenansicht, teilweise geschnitten, mit einem Werkzeug, wobei die Kupplungsmittel Einfach-Konus-Flächen aufweisen,
- Figur 3: ein weiteres Ausführungsbeispiel einer erfindungsgemäßen Werkzeugmaschine mit einem Fräser, wobei die Kupplungsmittel Einfach-Konus-Flächen aufweisen und
- Figur 4: ein weiteres Ausführungsbeispiel einer erfindungsgemäßen Werkzeugmaschine in Seitenansicht, teilweise geschnitten, wobei die Kupplungsmittel Zweifach-Konus-Flächen besitzen.

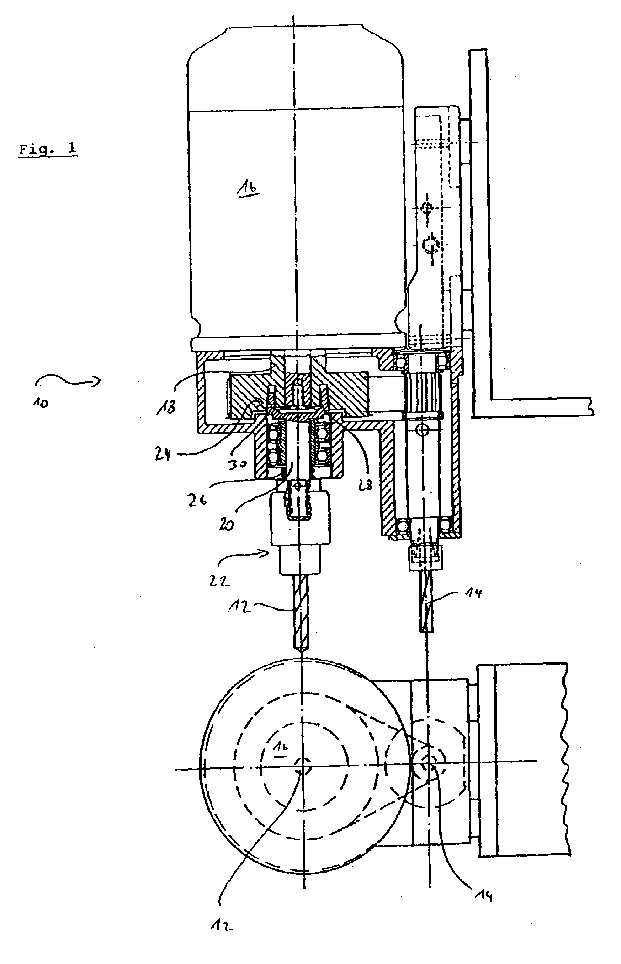

Die in Figur 1 dargestellte Werkzeugmaschine 10 dient zum drehbaren Antrieb von einem oder mehreren Werkzeugen 12, 14, wie beispielsweise einem Bohrer oder Fräser oder dergleichen. Hierzu ist eine mittels eines Motors 16 rotierend angetriebene Antriebswelle 18 vorgesehen. Diese Antriebswelle 18 ist einer Abtriebswelle 20 zugeordnet, wobei die Wellen 18, 20 im wesentlichen koaxial oder fluchtend zueinander angeordnet sind. Mit der Abtriebswelle 20 sind die Werkzeuge 12, 14 beispielsweise über einen Werkzeughalter 22 verbindbar. Sofern von der Werkzeugmaschine 10 mehrere Werkzeuge 12, 14 rotierend angetrieben werden, besteht die Möglichkeit, dass die Antriebswelle für das weitere Werkzeug, welche seitlich versetzt zur Antriebswelle 10 für das erste Werkzeug 12 angeordnet ist, über ein Getriebe, beispielsweise einen Riemenantrieb oder dergleichen, anzutreiben. Weiterhin ist die Abtriebswelle 20 drehbar in einem Drehlager der Werkzeugmaschine 10 aufgenommen.

Zwischen der Abtriebswelle 20 und der Antriebswelle 18 sind Kupplungsmittel 24 angeordnet, wobei die Abtriebswelle 20 axial verschiebbar bezüglich der Antriebwelle 18 gelagert und mittels eines Federelementes 26 in eine von der Antriebswelle 18 entkuppelte Ruheposition vorgespannt ist. Die Abtriebswelle 20 wird beim Verfahren des Werkzeuges 12, 14 gegen das Werkstück von der entkuppelten Ruheposition durch axiales Verfahren hin zur Antriebswelle 18 gegen die Vorspannung des ersten Federelements 26 in eine mit der Antriebswelle 18 gekuppelte erste Aktiv-Position überführt.

Die Kupplungsmittel 24 können durch Magnete, korrespondierende verzahnte Flächen, bevorzugt durch korrespondierende Konus-Flächen 28 an Antriebswelle 18 und Abtriebswelle 20 gebildet sein.

Aus den Ausführungsbeispielen der Figuren 1 bis 3 ist ersichtlich, dass die Kupplungsmittel 24 durch korrespondierende Einfach-Konus-Flächen 30 gebildet sind. Beim Ausführungsbeispiel der Figur 4 sind die Kupplungsmittel 24 durch korrespondierende Zweifach-Konus-Flächen 32 gebildet.

Bei diesem Ausführungsbeispiel der Figur 4 ist es weiterhin vorgesehen, dass die Abtriebswelle 20 mittels eines zusätzlichen zweiten Federelementes 34 mit zum ersten Federelement entgegengerichteter Vorspannung in die von der Antriebswelle 18 entkuppelte Ruheposition vorgespannt ist.

Durch diese Maßnahme ist die Möglichkeit gegeben, dass die Abtriebswelle 20 durch axiales Verfahren weg von der Antriebswelle 18 gegen die Vorspannung des zweiten Federelements 34 in eine mit der Antriebswelle 18 gekuppelte zweite zusätzliche Aktiv-Position überführbar ist.

Das oder die Federelemente 26, 34 können als Schraubenfeder, Tellerfeder oder dergleichen Druck- oder Zugfeder ausgebildet sein.

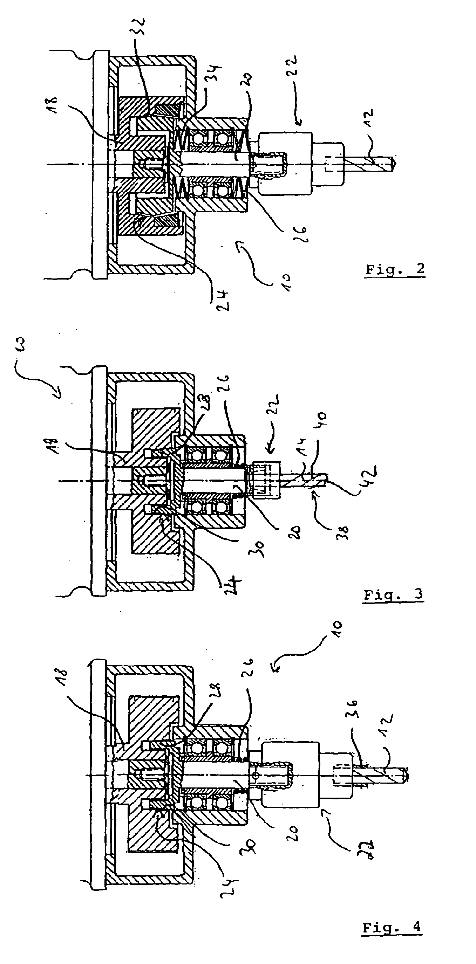

Für den Fall, dass die Kupplungsmittel 24 als Einfach-KonusFläche 30 ausgebildet sind, bietet es sich an, dass der Werkzeughalter 22 oder das Werkzeug 12, 14 an dem seinem freien Endabschnitt abgewandten Abschnitt einen Anschlag, Abstandshalter 36 nach Art einer Buchse oder Hülse aufweist, wie dies in Figur 2 dargestellt ist. Kommt es bei der Bearbeitung eines Hohlprofiles zu einer Zugbeanspruchung des Bohrers 12 bzw. 14, wenn bspw. nach Durchbrechen des Bohrers 12 bzw. 14 durch die Wandung des zu bearbeitenden Werkstücks, so schlägt der Abstandshalter 36 nach Durchdringen des Bohrers 12 bzw. 14 durch die erste Profilwand des Hohlprofils an diese an, so dass aufgrund der dann auf das Werkzeug 12 bzw. 14 wirkenden Druckbeanspruchung die Kupplungsmittel 24 wieder in die erste Aktivposition überführt werden und das Werkzeug 12 bzw. 14 durch die Antriebswelle 18 weiter in Rotation versetzt wird.

Weiterhin ist aus Figur 3 ersichtlich, dass das Werkzeug 14 als Fräser ausgebildet ist, der eine Fräserschneide 40 und am freien Ende eine Eintauchschneide 42 aufweist. Fräserschneide 40 und Eintauchschneide 42 weisen entgegngesetzte Steigung auf, zum Beispiel kann die Fräserschneide 40 eine Linkssteigung und die Eintauchschneide 42 eine Rechtssteigung besitzen. Hierdurch ist erreicht, dass die vom Fräser abgehobenen Späne des Werkstückes gezielt ausgeworfen und damit aufgefangen werden können.

Von Vorteil kommt die Erfindung bei solchen Werkzeugmaschinen zur Anwendung, die wenigstens zwei versetzt zueinander angeordnete Werkzeuge 12, 14 zur Bearbeitung eines Werkstückes rotierend antreiben. Dabei ist es vorzugsweise vorgesehen, dass wenigstens das der Bedienperson nächste Werkzeug, im Ausführungsbeispiel der Figur 1 das Werkzeug 12, die Kupplungsmittel 24 zur Kupplung von Antriebswelle 20 und Abtriebswelle 18 aufweist.

### Bezugszeichenliste

- 10: Werkzeugmaschine
- 12: Werkzeug
- 14: Werkzeug
- 16: Motor
- 18: Antriebswelle
- 20: Abtriebswelle
- 22: Werkzeughalter
- 24: Kupplungsmittel
- 26: Federelement
- 28: Konusfläche
- 30: Einfachkonusfläche
- 32: Zweifachkonusfläche
- 34: weiteres Federelement
- 36: Abstandshalter
- 38: Fräser
- 40: Fräserschneide
- 42: Eintauchschneide

## Patentansprüche

1. Werkzeugmaschine (10) zum drehbaren Antrieb von einem oder mehreren Werkzeugen (12, 14), wie Bohrer, Fräser, oder dergleichen, mit einer mittels eines Motors (16) rotierend angetriebenen Antriebswelle (18) und einer Abtriebswelle (20), wobei die Wellen (18, 20) im wesentlichen koaxial oder fluchtend zueinander angeordnet und über Kupplungsmittel (24) miteinander wirkverbindbar sind, und mit der Abtriebswelle (20) das Werkzeug (12, 14) beispielsweise über einen Werkzeughalter (22) verbindbar ist, **dadurch gekennzeichnet, dass** die Antriebswelle (18) axial fest und die Abtriebswelle (20) axial verschiebbar in einem gemeinsamen Gehäuse gelagert sind, wobei die Abtriebswelle (20) mittels eines Federelements (26) in eine von der Antriebswelle (18) entkuppelte Ruheposition vorgespannt ist.

2. Werkzeugmaschine nach Anspruch 1, **dadurch gekennzeichnet, dass** die Abtriebswelle (20) durch ein axiales Verfahren hin zur Antriebswelle (18) gegen die Vorspannung des Federelements (26) in eine mit der Abtriebswelle (18) gekuppelte erste Aktivposition überführbar ist.

3. Werkzeugmaschine nach Anspruch 1 oder 2, **dadurch gekennzeichnet, dass** die Kupplungsmittel (24) durch Magnete, korrespondierende verzahnte Flächen oder bevorzugt durch korrespondierende Konusflächen (28) an Antriebswelle (18) und Abtriebwelle (20) gebildet sind.

4. Werkzeugmaschine nach einem der Ansprüche 1 bis 2, **dadurch gekennzeichnet, dass** die Kupplungsmittel (24) als pneumatische oder hydraulische Kupplung ausgebildet sind.

5. Werkzeugmaschine nach einem der vorhergehenden Ansprüche, **dadurch gekennzeichnet, dass** die Kupplungsmittel (24) durch korrespondierende Einfachkonusflächen (30) gebildet sind.

6. Werkzeugmaschine nach einem der vorhergehenden Ansprüche 1 bis 3, **dadurch gekennzeichnet, dass** die Kupplungsmittel (24) durch korrespondierende Zweifach-Konusflächen (32) gebildet sind.

7. Werkzeugmaschine nach Anspruch 6, **dadurch gekennzeichnet, dass** die Abtriebswelle (20) mittels eines weiteren Federelementes (34) mit zum ersten Federelement (26) entgegengerichteter Vorspannung in die von der Antriebswelle (18) entkuppelte Ruheposition vorgespannt ist.

8. Werkzeugmaschine nach Anspruch 6 oder 7, **dadurch gekennzeichnet, dass** die Abtriebswelle (20) durch axiales Verfahren weg von der Antriebswelle (18) gegen die Vorspannung des weiteren Federelementes (34) in eine mit der Antriebswelle (18) gekuppelte zweite Aktivposition überführbar ist.

9. Werkzeugmaschine nach einem der vorhergehenden Ansprüche, **dadurch gekennzeichnet, dass** das Federelement (26, 34) als Schraubenfeder, Tellerfeder oder dergleichen Druck- oder Zugfeder ausgebildet ist.

10. Werkzeugmaschine nach einem der vorhergehenden Ansprüche, **dadurch gekennzeichnet, dass** der Werkzeughalter (22) oder das Werkzeug (12, 14) an seinem freien Endabschnitt abgewandten Abschnitt einen Anschlag, Abstandshalter (36) nach Art einer Buchse oder Hülse aufweist.

11. Werkzeugmaschine nach einem der vorhergehenden Ansprüche, **dadurch gekennzeichnet, dass** das Werkzeug (14) als Fräser ausgebildet ist, der eine Fräserschneide (40) und am freien Ende eine Eintauchschneide (42) aufweist, die entgegengesetzte Steigung, zum Beispiel Fräserschneide (40) Linkssteigung und Eintauchschneide (42) Rechtssteigung, aufweisen.

12. Werkzeugmaschine nach einem der vorhergehenden Ansprüche, wobei wenigstens zwei Werkzeuge (12, 14) zur Bearbeitung eines Werkstückes hintereinander angeordnet sind, **dadurch gekennzeichnet, dass** wenigstens dem der Bedienperson nächstliegenden Werkzeug (12, 14) die Kupplungsmittel (24) zur Kupplung von Abtriebswelle (20) und Antriebswelle (18) zugeordnet sind.

## Claims

1. Machine tool (10) for rotatable drive of one or more tools (12, 14), such as drills, milling tools or the like, with a drive shaft (18), which is rotationally driven by means of a motor (16), and a driven shaft (20), wherein the shafts (18, 20) are arranged substantially coaxially or in alignment with one another and are operatively connectible together by way of coupling means (24), and the tool (12, 14) is connectible with the driven shaft (20) by way of, for example, a tool holder (22), **characterised in that** the drive shaft (18) and the driven shaft (20) are mounted in a common housing to be, respectively, axially fixed and axially displaceable, wherein the driven shaft (20) is biased by means of a spring element (26) into a rest position decoupled from the drive shaft (18).

2. Machine tool according to claim 1, **characterised in that** the driven shaft (20) can be transferred by an axial movement towards the drive shaft (18) against the bias of the spring element (26) into a first active position coupled with the driven shaft (18).

3. Machine tool according to claim 1 or 2, **characterised in that** the coupling means (24) are formed by magnets, corresponding toothed surfaces or preferably by corresponding conical surfaces (28) at drive shaft (18) and driven shaft (20).

4. Machine tool according to one of claims 1 and 2, **characterised in that** the coupling means (24) are constructed as pneumatic or hydraulic coupling.

5. Machine tool according to one of the preceding claims, **characterised in that** the coupling means (24) are formed by corresponding single cone surfaces (30).

6. Machine tool according to one of the preceding claims 1 to 3, **characterised in that** the coupling means (24) are formed by corresponding double cone surfaces (32).

7. Machine tool according to claim 6, **characterised in that** the driven shaft (20) is biased by means of a further spring element (34) with a bias, which is opposite to the first spring element (26), into the rest position decoupled from the driven shaft (18).

8. Machine tool according to claim 6 or 7, **characterised in that** the driven shaft (20) is transferrable by axial movement away from the drive shaft (18) against the bias of the further spring element (34) into a second active position coupled with the drive shaft (18).

9. Machine tool according to one of the preceding claims, **characterised in that** the spring element (26, 34) is constructed as a helical spring, plate spring or like compression or tension spring.

10. Machine tool according to one of the preceding claims, **characterised in that** the tool holder (22) or the tool (12, 14) has at its section remote from the free end section an abutment, spacer (36) in the manner of a bush or sleeve.

11. Machine tool according to one of the preceding claims, **characterised in that** the tool (14) is constructed as a milling tool, which has a milling cutter (40) and at the free end a dip cutter (42), which have opposite pitch, for example milling cutter (40) lefthand pitch and dip cutter (42) righthand pitch.

12. Machine tool according to one of the preceding claims, wherein at least two tools (12, 14) for processing a workpiece are arranged one behind the other, **characterised in that** coupling means (24) for coupling of driven shaft (20) and drive shaft (18) are associated at least with the tool (12, 14) closest to the user.

## Revendications

1. Machine-outil (10) pour la rotation accouplée d'un outil ou d'outils multiples (12, 14) tels que des forets, des fraises ou similaire, avec un arbre de transmission (18) entraîné de manière rotative au moyen d'un moteur (16) et avec un arbre récepteur (20), les arbres (18, 20) étant placés essentiellement coaxialement ou en alignement l'un par rapport à l'autre et pouvant être mis en liaison active par des moyens de couplage (24), et l'outil (12, 14) pouvant être relié à l'arbre récepteur (20) par exemple par un support d'outil (22), **caractérisée en ce que** l'arbre de transmission (18) et l'arbre récepteur (20) sont logés dans un carter commun, l'arbre de transmission (18) de manière fixe et axiale et l'arbre récepteur (20) en pouvant être déplacé axialement, l'arbre récepteur (20) étant précontraint au moyen d'un élément formant ressort (26) dans une position de repos découplée de l'arbre de transmission (18).

2. Machine-outil selon la revendication 1, **caractérisée en ce que** l'arbre récepteur (20) peut être amené par un procédé axial vers l'arbre de transmission (18) à l'encontre de la précontrainte de l'élément formant ressort (26) dans une première position active couplée à l'arbre de transmission (18).

3. Machine-outil selon la revendication 1 ou 2, **caractérisée en ce que** les moyens de couplage (24) sont formés par des aimants, des surfaces dentées correspondantes ou de préférence par des surfaces coniques (28) correspondantes sur l'arbre de transmission (18) et l'arbre récepteur (20).

4. Machine-outil selon l'une quelconque des revendications 1 à 2, **caractérisée en ce que** les moyens de couplage (24) sont conçus comme couplage pneumatique ou hydraulique.

5. Machine-outil selon l'une quelconque des revendications précédentes, **caractérisée en ce que** les moyens de couplage (24) sont formés par des surfaces coniques simples (30) correspondantes.

6. Machine-outil selon l'une quelconque des revendications 1 à 3, **caractérisée en ce que** les moyens de couplage (24) sont formés par des surfaces coniques doubles (32) correspondantes.

7. Machine-outil selon la revendication 6, **caractérisée en ce que** l'arbre récepteur (20) est précontraint au moyen d'un autre élément formant ressort (34) dans la position de repos découplée de l'arbre de transmission (18) par précontrainte opposée au premier élément formant ressort (26).

8. Machine-outil selon la revendication 6 ou 7, **caractérisée en ce que** l'arbre récepteur (20) peut, par un procédé axial, être éloigné de l'arbre de transmission (18) à l'encontre de la précontrainte de l'autre élément formant ressort (34) et être amené dans une deuxième position active couplée à l'arbre de transmission (18).

9. Machine-outil selon l'une des revendications précédentes, **caractérisée en ce que** l'élément formant ressort (26, 34) est conçu comme ressort hélicoïdal, rondelle-ressort ou ressort de compression ou de traction similaire.

10. Machine-outil selon l'une quelconque des revendications précédentes, **caractérisée en ce que** le support d'outil (22) ou l'outil (12, 14) présente sur sa section opposée à la section d'extrémité libre une butée, un écarteur (36) de type manchon ou une douille.

11. Machine-outil selon l'une quelconque des revendications précédentes, **caractérisée en ce que** l'outil (14) est conçu comme une fraise qui présente une arête de fraise (40) et sur l'extrémité libre une arête d'immersion (42), lesquelles présentent une inclinaison opposée, par exemple une inclinaison à gauche pour l'arête de fraise (40) et une inclinaison à droite pour l'arête d'immersion (42).

12. Machine-outil selon l'une quelconque des revendications précédentes, au moins deux outils (12, 14) étant disposés l'un derrière l'autre pour usiner une pièce, **caractérisée en ce que** les moyens de couplage (24) pour coupler l'arbre récepteur (20) et l'arbre de transmission (18) sont attribués au moins à l'outil (12, 14) se trouvant le plus proche de l'opérateur.
